# EUROPEAN PATENT SPECIFICATION

(11) **EP 2 512 259 B1**
(45) Date of publication and mention of the grant of the patent: **05.11.2014**
(21) Application number: 10803169.1
(22) Date of filing: 17.12.2010
(51) Int. Cl.: A23C 19/05, A23C 19/055

(54) **CHEESE LOW IN SATURATED FATTY ACIDS AND METHOD OF MAKING SAME**
KÄSE MIT GERINGEM GEHALT AN GESÄTTIGTEN FETTSÄUREN UND HERSTELLUNGSVERFAHREN DAFÜR
FROMAGE PAUVRE EN ACIDES GRAS SATURÉ ET PROCÉDÉ DE FABRICATION DE CELUI-CI

(30) Priority: 18.12.2009 NL 2003984
(43) Date of publication of application: 24.10.2012
(73) Proprietor: FrieslandBrands B.V., 3818 LE Amersfoort (NL)
(72) Inventor: ROBIJN, Gerard, Willem, NL-7462 AS Colmschate (NL); HEUVELMAN, Lambertus, NL-7462 DR Rijssen (NL); KOMAN-BOTERBLOM, Hendrika, NL-7421 EZ Deventer (NL)
(74) Representative: Jansen, Cornelis Marinus
(86) International application number: PCT/NL2010/050869
(87) International publication number: WO 2011/074968

(56) References cited:
- EP-A1- 0 368 492
- EP-A1- 1 654 934
- EP-A2- 0 427 307
- EP-A2- 0 454 268
- WO-A1-2004/057971
- GB-A- 2 255 489
- NL-C2- 1 018 347
- US-A- 4 066 800

## Description

### Field of the Invention

The invention relates to a method of making a natural, hard or semi-hard cheese or cheese product on the basis of a fat emulsion other than milk. Particularly, the invention pertains to a method of making a natural, hard or semi-hard cheese or cheese product with an increased content of unsaturated fatty acid. The invention also relates to a method of reducing the content of saturated fatty acid in a natural, hard or semi-hard cheese product.

### Background to the Invention

Traditionally, cheese making involves a process wherein milk ingredients are concentrated in order to preserve the ingredients for long periods of time. Many types of cheese exist, each having its own specific production process. Generally, the basic steps in cheese making comprise: providing cheese milk; adding starter cultures; adding a coagulant (rennet type enzymes), coagulation of caseins by proteolytic actions of the coagulant, inducing the milk to form a gel (curd); cutting the curd and removing a large part of the water (whey) from the curd, thereby concentrating the caseins and the fat; addition of salt; and ripening.

As cheese is traditionally made of milk, the fatty acid components in cheese are those from milk. Milk fat (also known as butter fat) has a relatively high content of saturated fatty acids (typically 60% to 70% by weight).

Accepted health food theories indicate that, generally, it will have health benefits to include unsaturated rather than saturated fats in nutritional products. This also applies to cheese, and attempts have in fact been made to substitute unsaturated fat for (part of) the original saturated milk fat.

This substitution generally requires that the cheese milk, in whole or in part, is replaced by an emulsion of one or more desired other fats, typically unsaturated fats. Whilst, technically, providing such emulsions and combining these with cheese milk does not present significant problems, the taste and/or texture (organoleptic characteristics) of the resulting cheese does.

Reference is made, e.g., to EP 368 492. Herein a cheese product is disclosed which is a non-milk fat cheese, or a blend of non-milk fat and milk fat cheese. It is intended that in the non-milk fat emulsion used, the fat is coated by a membrane so that in a casein lattice the fat substantially mimics milk fat. To this end a blend of an emulsifier (lecithin) and a stabilizer (gelatin) is provided. In another embodiment, the membrane is said to be whey protein. It has not turned out possible, neither in the lecithin/gelatin embodiment, nor in the whey protein embodiment, to produce an acceptable cheese-like product in this manner. Aroma, taste, and texture difference immediately tell that the cheese is not regular, milk-based cheese. In particular, the resulting cheese products have a considerably weaker structure, and hence a less desirable texture, than regular milk-based cheese. Further, the teaching of this reference essentially is the use of a blend of hard and soft fats, with the aim to mimic milk fat, and thus also the properties of the fat in cheese. This teaching is unsuitable to comply with the preference of the invention, viz. to replace part of the milk fat by vegetable fat, as a result of which the total fat content will not resemble milk fat in the first place.

Another reference is EP 454 268, which relates to the preparation of an oil-in-water emulsion suitable for the preparation of dairy or dairy-like products, such as cheese. In an attempt to solve problems, such as organoleptic and/or stability problems, with previous emulsions for the same purpose, an emulsifier is provided in the form of predominantly undenatured whey protein. When applied to cheese making, however, also this emulsion does not lead to a cheese-product having an acceptable texture. Rather, the resulting cheese-product is undesirably soft and mushy.

Also in practice, cheese products based on non-milk fat have not received much success, and developments as above have been abandoned long since. Nevertheless, it would be desired to be able to produce an acceptable cheese product in which at least part of the saturated fat is replaced by unsaturated fat. Particularly, it would be desired to produce a cheese product having such fat replacement and, yet, being hardly or not distinguishable from regular milk-based cheese.

As a further background to the invention, the following references are presented.

EP 779 035 discloses a modified whey protein comprising a partially heat-denatured whey protein and an undenatured whey protein. The document indicates that denatured whey protein is not preferably used as a food material. The disclosed modified whey protein can be used in meat products such as sausage and ham, desserts such as jelly, and fish meat products.

Strugnell, Nutrition & Food Science, No.4, July/August 1993, pp21-25, presents a discussion on the need for vegetable oil cheese. Reference is made to a test of various cheeses, including vegetable oil cheeses. This test confirms that particularly in texture great differences occur, such as either soft and crumbly or rubbery.

Lück et al., S..Afr.J. Dairy Technol. (1972) Vol. 4 No.4, pp 221-223 refers to early attempts to replace butterfat by equal amounts of vegetable or animal fat, which resulted in cheese scoring e.g. low in flavor, and describes experiments in which, in an otherwise unmodified cheese making process, butterfat was replaced by margarine fat (manufactured from peanut and sunflower oil). All cheeses containing vegetable fat were short in texture, and received lower flavor scores than the reference cheese.

EP 815 735 discloses dietetically balanced milk products comprising glycerides that in part have fatty acids from milk, and in part mono- and polyunsaturated fatty acids. The milk product may be a cheese, particularly of the mozzarella type. The milk product may contain an emulsifier, typically lecithin.

WO 2009/011573 discloses a heat stable nutritional beverage comprising whey protein that is optionally heat-treated.

EP 1 101 408 refers to a method for preparing a low-fat cheese. Herein a whey protein concentrate (WPC) is added to cheese milk. Exemplified whey protein concentrates are coagulated. The WPC is used as a filler material to help counteracting the effect of lower amounts of fat included.

In addition to making it possible to produce a cheese or cheese product of acceptable texture having a reduced content of saturated fatty acids, it would be desired also to provide a method of making cheese on the basis of a milk fat (butter fat) emulsion *per se.* This involves problems similar to that of making cheese products comprising vegetable fat, as butter fat once isolated (e.g. anhydrous milk fat, abbreviation AMF) has lost the capacity of being coagulated into a cheese of firm, soft and creamy texture. A method to make good cheese from AMF would be advantageous, e.g. as AMF is much more suitable than milk or cream for being shipped, and this would enable providing a key ingredient for cheese making in parts of the world where milk is not well available.

### Summary of the Invention

In order to better address one or more of the above-mentioned desires, the present invention, in one aspect, provides a method of making a natural, hard or semi-hard cheese or cheese product by coagulating a liquid that comprises milk protein and fat, said liquid comprising at least one oil-in-water emulsion, wherein said emulsion comprises a denatured, non-coagulated whey protein.

The invention, in another aspect, presents a method of making cheese having an increased content of unsaturated fatty acids as compared to milk, comprising subjecting a milk-based liquid to a cheese-making process, wherein the milk-based liquid comprises a first and a second oil-in-water emulsion, the first being milk or cream, the second being an emulsion of a fat having an unsaturated fatty acid content higher than that of the first emulsion, wherein the second emulsion comprises a denatured, non-coagulated whey protein.

The invention, in another aspect, provides the use of a denatured, non-coagulated whey protein in making a cheese product, particularly a cheese product having an increased content in unsaturated fatty acids, by coagulating a liquid that comprises milk protein and fat, said liquid comprising at least one oil-in-water emulsion, wherein said whey protein is used for the purpose of stabilizing said oil-in-water emulsion.

In yet a further aspect, the invention provides hard or semi-hard cheese comprising an unsaturated fat having an unsaturated fatty acid content higher than that of milk fat, said unsaturated fat being associated with denatured whey protein.

### Detailed Description of the Invention

In a broad sense, the invention provides a tool to make cheese products on the basis of an oil-in-water emulsion comprising just any fat, in addition to or in lieu of milk or cream. Said tool is the judicious incorporation in said emulsion of a denatured, non-coagulated whey protein. Herein the denatured, non-coagulated whey protein serves to stabilize the emulsion. With reference to existing methods of making cheese in which, in one form or the other, whey protein is used, this is for different purposes (e.g. as a filler, not as an emulsifier) and/or in a non-denatured form, or in a coagulated form.

In order to obtain an optimal stabilizing effect of the denatured, non-coagulated whey protein on the oil-in-water emulsion, it is preferred that the emulsion, in the presence of said whey protein stabilizer, is homogenized prior to the cheese making process, and preferably prior to combining the emulsion with cheese milk.

In the invention, this emulsion is combined with milk protein (e.g. by providing milk or milk powder), and subjected to cheese making. In this cheese making, just as with existing cheese, the liquid will be coagulated so as to separate liquids (water) from the solids that will form the cheese, viz. solids comprising fat distributed throughout a casein matrix.

In existing cheese making, the emulsion is milk or cream. If used in the form of milk or cream, milk fat is known to comprise a globule membrane. Vegetable fats do not have this membrane. Also if milk fat is fractionated, or if it is provided in the form of AMF, it becomes devoid of said membrane. As a result, if such vegetable fat, milk fat fractions, or isolated milk fat are used in making cheese, the result is a soft and mushy product that does not have a cheese texture as desired.

According to the invention, the characteristics of a cheese comprising a fat devoid of a globule membrane, such as cheese having an increased content of unsaturated fatty acids provided by means of vegetable fat or milk fat fractions, can be improved by stabilizing the emulsion of said fat with a denatured, non-coagulated whey protein. Where it says "non-coagulated" this does not preclude an insubstantial coagulation to have occurred, e.g. up to 5 wt.% of the whey protein could be characterized as coagulated, preferably up to 1 wt.%, and more preferably up to 5‰ by weight. The non-coagulated whey protein is particularly characterized with reference to particle sizes that do not substantially differ from particle sizes of non heat-treated whey protein, which are generally 10 to 30 nm in particle size, typically about 20 nm. At most, particles could comprise some degree of aggregation, but this will generally not be at a level above overall (aggregate) particle sizes of 100 nm. Preferably, the denatured, non-coagulated whey protein has overall particle sizes below 80 nm, more preferably below 60 nm, still more preferably below 50 nm, and most preferably below 40 nm. The particle size can be determined by light-scattering methods well-known in the art. A solution of the denatured, non-coagulated whey protein in water, particularly in the concentrations generally used according to the invention, will be transparent (i.e. visible light will pass through it). A solution that is non-transparent is considered to comprise coagulated whey protein.

The denatured, non-coagulated whey protein is preferably obtainable by subjecting a whey protein to a denaturing heat treatment at pH6-8 and, most preferably actually so obtained. The denaturing can also be effectuated in other manners, such as pressure-induced denaturing (ref. Rademacher et al., Reaction kinetics of ultra-high pressure treatment of milk, in Advances in High Pressure and Biotechnologie, Berlin: Springer 1999, S. 449 - 452). E.g., at 700 MPa a denaturation of whey protein of 50% is obtained in 20 minutes.

Preferably, the denatured whey protein is obtained by heating a whey protein solution to a temperature higher than the heat-denaturing temperature of the whey protein, i.e. 55° C or higher. Preferably, the heating is conducted at a higher temperature, e.g. 90°C to 150°C, preferably 110°C to 130°C, and most preferably about 120°C. The person skilled in the art is well aware that the duration of the denaturing heating will generally be adaptable to the temperature, i.e. the higher the temperature, the shorter the duration. Typically preferred temperature/time combinations are: 4 seconds at 120°C, 4 seconds at 140°C, 1 hour at 80°C, 20 seconds at 95°C, 120 seconds at 85°C. It will be understood that the term "denatured" does not imply that all of the whey protein is necessarily denatured, as the presence of non-denatured whey protein in addition to the denatured, non-coagulated whey protein does not substantially affect the cheese making process. Preferably, at least 50 wt.% of all whey protein used is denatured, non-coagulated whey protein, more preferably at least 75 wt.%, and most preferably 80-95 wt.%.

A further advantage enjoyed in accordance with the invention, is that the use of heated whey protein aids in preventing contamination with bacteriophages. Phage control is of importance in cheese making, in order to retain the necessary activity of the starter cultures.

The solution generally will have a concentration of 0.5% to 15%, as in this concentration range the whey protein does not coagulate when heated. If higher concentrations are used, other technical measures can be taken to avoid coagulation, but this is generally more complicated, hence less desired, than staying within the aforementioned concentration range.

A whey protein solution is commonly known to coagulate by heating to produce a fragile gel when the concentration is higher than 15% by weight. To prevent such a gel formation, a solution of whey protein at a concentration of 15% by weight or less, preferably 1-10% by weight is employed. Most preferably the solution to be heated has a concentration of 2.5% -7.5% by weight, typically 5% by weight.

The heating is preferably conducted at a pH of 6-8. A higher pH, whilst technically feasible, is not desired in view of the resulting taste characteristics of the whey protein. For optimal taste characteristics (i.e. the avoidance of a bad taste), the pH is preferably not higher than 7.25. Most preferably, a pH of 6.5 to 7 is employed. A lower pH value of 4-6 is possible if measures are taken to prevent the formation of a gel. A suitable measure is to immediately after heating dilute the solution to below 2% by weight, and preferably to below 1% by weight.

The concentration of the denatured, non-coagulated whey protein in the emulsion will generally be 0.2% by weight to 5% by weight, and preferably 0.5% by weight to 2% by weight, typically 0.75% by weight.

According to the invention it has been found that pre-heated (denatured, non-coagulated) whey protein has a surprising effect on the characteristics, particularly the texture, of cheese in which milk fat is partially replaced by fat having a higher content of unsaturated fatty acids than milk fat, notably vegetable fat. Without wishing to be bound by theory, the inventors believe that the pre-heating of the whey protein increases the SH reactivity thereof (the amount of free -SH groups present). Upon the addition to milk (which contains salt), the whey protein will form a dense structure with, as a result of the SH-reactivity, crosslinking by the formation disulfide bridges. Heating to coagulation temperature (e.g. 30°C) will accelerate this process. Whilst this already provides a firm skin around the oil droplets present, the firmness of the structure is further increased after coagulation. The remaining SH-reactivity will result in further crosslinking of the protein skin with the casein matrix that results from coagulation, thus increasing the firmness of the structure. This firmer structure compensates for the intrinsically weaker texture that normally results from using vegetable fat. In addition, a preference in making the vegetable fat emulsion is to provide this poor in salt, at any rate at a substantially lower salt content than cheese milk (regularly having an ion strength of about 0.08 mol/liter, with milk ion strengths ranging from 30 to 200 mmol/liter depending on the mammal from which it is harvested). E.g. 70 mmol/liter for sheep's milk and 84 mmol/liter for goat's milk. The difference in salt content between the non-milk fat emulsion and the cheese milk will, upon mixing these two emulsions, fortify the above effect of salt on the whey-protein coated non-milk fat, i.e. the formation of a network firmly surrounding the non-milk fat.

In comparison if, e.g., skimmed milk powder is used in the fat emulsion, an essentially unsuitable structure will result. In that case, the fat particles will be covered with casein. During coagulation the casein-covered fat will undergo a strong interaction with the casein matrix, which results in a short (brittle), rubbery cheese texture that is far from the desired soft and creamy texture. Thus, the invention has revealed that the existing thought to have non-milk fat resemble milk by emulsifying it with casein, essentially yields an adverse result.

The whey protein used in the invention can be of various sources. E.g., the whey protein used in the present invention includes a cheese whey protein which is obtained as a by-product in a cheese manufacturing process, an acid whey protein produced by removing casein from milk by adding an acid, a whey protein produced by removing minerals and lactose from these whey proteins by a desalting treatment, and an isolated whey protein produced by recovering only precipitated whey protein fractions by adding ethanol. All of these can be prepared from milk and contain proteins such as alpha - lactoalbumin and beta -lactoglobulin. Among these whey proteins, particularly preferred are whey protein concentrate (WPC), whey protein isolate (WPI), and the like.

The invention, in one embodiment, is concerned with making cheese in which milk fat is replaced, in part, by other fats, or by fractionated milk fat. In particular, the fat preferably comprises non-milk fat (e.g., vegetable fat), one or more milk fat fractions, or isolated milk fat (e.g., AMF). According to the invention this can be realized by providing two emulsions, one (the "first emulsion") being an emulsion of milk fat (such as milk), the other (the "second emulsion") being an emulsion of a fat that is different from milk fat, and preferably of a fat having an unsaturated fatty acid content higher than that of the first emulsion. This particularly refers to vegetable fat, or to one or more fractions of milk fat having a higher content of unsaturated fatty acids.

As to the differences in unsaturated fatty acid content, the content of unsaturated fatty acids in the second emulsion preferably is at least 10 wt% higher than that of the first emulsion, more preferably at least 20 wt.% higher, and most preferably at least 30 wt.% higher. With the example of milk fat having on average 70 wt.% of saturated fatty acids, it thus preferred if the emulsion used in the invention comprises a fat having at most 60 wt.% of saturated fatty acids, preferably at most 50 wt.% of saturated fatty acids, and most preferably at most 40 wt.% of saturated fatty acids. In a further preferred embodiment, fats are used having not more than 10 wt.% of saturated fatty acids.

Since not all food legislations worldwide will allow a cheese product made from, in part, non-milk fat to be denoted "cheese", the term "cheese product" is also used in this description. In this description the terms "cheese" and "cheese product" are used interchangeably. The use of fractionated milk fat is preferred for, *inter alia,* the purpose of producing a product that is considered to be a cheese. The use of vegetable fat is preferred for, *inter alia,* the purpose of producing a cheese product comprising healthy, vegetable fat.

Methods and apparatuses for preparing cheese are widely known from practice. In general, cheese is prepared by providing cheese milk, inoculating this with starter bacteria, adding a coagulant such as rennet so as to form curd, subsequently draining the liquid phase (whey), and then forming young cheese from the curd. Then, the young cheese can be subjected to a salt treatment, such as a brine treatment, by bringing it into a brine bath for some time. After it has undergone a salt treatment, such as a brine treatment, the young cheese is usually stored in a cheese warehouse to undergo a controlled ripening process.

Where cheese is mentioned in the context of the present invention, it is understood as any type of natural cheese. In a preferred embodiment, the invention relates to hard and semi-hard types of cheese, and most preferably to semi-hard cheese. The term "semi-hard" cheese is known to the skilled person, and is generally understood as referring to cheese which is subjected to ripening for at least 4 weeks. Examples of semi-hard cheeses are Gouda, Edam, Maasdam. Reference is made to IDF bulletin 141 1981 ISSN 0250-5118.

The invention is applicable to full fat cheese as well as to semi fat and low fat cheese. Many traditional cheeses have fat contents of more than 20 wt%, typically up to 30 wt% (based upon the total weight of the final cheeses). For example, a Gouda cheese has a fat content of about 30 wt% (total weight). Alternatively, the amount of fat may be defined in terms of the dry solids content. For instance, the aforementioned Gouda cheese corresponds to about 50 wt% based upon the dry matter (48+ cheese).According to their fat content, cheeses are classified as follows: high fat: fat in dry matter at least 60 wt%, full fat: fat in dry matter at least 45 wt%, but less than 60 wt%, medium fat: fat in dry matter at least 25 wt%, but less than 45 wt%, partially skimmed: fat in dry matter at least 10 wt%, but less than 25 wt%, skim: fat in dry matter less than 10 wt%.

Considering that the invention, in a preferred embodiment, relates to introducing a higher amount of healthier, unsaturated fatty acids into cheese, the invention preferably pertains to medium or full fat cheese since higher fat contents in cheese, will enable the introduction of higher absolute amounts of unsaturated fatty acids. For this reason, full fat cheese is the most preferred.

Natural cheese according to the present invention will be understood to be natural cheese according to the *Codex Alimentarius* definition, Typically, such natural cheese is the ripened or unripened soft, semi-hard, hard, or extra-hard product, which may be coated, and in which the whey protein/casein ratio does not exceed that of milk, obtained by (a) coagulating wholly or partly the protein of cheese milk (milk, skimmed milk, partly skimmed milk, cream, whey cream or buttermilk, dissolved skimmed milk powder, dissolved full fat milk powder, MPC's (milk protein concentrates), retentates of milk ultrafiltration, retentates of milk microfiltration, or any combinations of these materials), through the action of rennet or other suitable coagulating agents, and by partially draining the whey resulting from the coagulation, while respecting that cheese making results in a concentration of milk protein (in particular, the casein portion), and that consequently, the protein content of the cheese will be distinctly higher then the protein level of the blend of the above milk materials from which the cheese was made; and/or (b) processing techniques involving the coagulation of the protein of milk and/or products obtained from milk which give an end-product with similar physical, chemical and organoleptic characteristics as defined under (a). It will be understood that the cheese produced in accordance with the invention deviates from the foregoing in the sense that in addition to "milk" the second emulsion is present. The cheese milk can be regular milk, but it can also be an emulsion made from separately obtained milk powder and water.

As in various embodiments of the invention the second emulsion will not be milk-based, the combined first and second emulsions are also referred to as a cheese making liquid. In this description reference is made to first and second emulsions. It will be understood that the invention is not restricted to the use of two emulsions, i.e. a plurality of second and further emulsions can also be used. Although this may have advantages if a mixture of different fats of increased unsaturated fatty acid contents is desired, it will be generally preferred from a practical and economical point of view to just provide a cheese making liquid on the basis of not more than two emulsions, one being regular cheese milk, the other being an emulsion of fat having a higher content of unsaturated fatty acids than milk fat, the latter emulsion comprising denatured, non-coagulated whey protein.

The invention has been found particularly suitable for Dutch varieties such as Gouda, Edam and Maasdam. The Dutch cheese is defined by Walstra et al. in chapter 2 of "Cheese: Chemistry, Physics and Microbiology, Volume 2, Major cheese Groups, ed. P.F. Fox, Chapman & Hall, ISBN 0 412 53510 6.

Making the cheese of the invention does not require specific equipment other than, if applicable, for adding a second emulsion. All other apparatuses used in cheese making are in accordance with known cheese making methods.

After having combined the two emulsions into a cheese making liquid, a regular cheese making process can be conducted, as referred to above.

As indicated hereinbefore, an issue in making cheese products with milk fat replaced, relates to texture. Thus, a cheese is desired to be soft and creamy, malleable, supple or flexible. It preferably should not be firm, rubbery, grainy, or gritty, which is usually seen as undesired for cheese texture, and which plays a role in low fat cheeses in particular. With reference to the replacement of milk fat, it is particularly desired that the cheese (while being soft and creamy) is not as soft as to become mushy.

A reference to definitions of sensory and mechanical properties of cheese is A.A. Foegeding and M.A. Drake, J. Dairy Sci. 90:1611-1624 (2007), pages 1611-1624.

The cheese of the invention is preferably made from a blend of two or more emulsions, one being regular cheese milk with the milk fat in the form of a natural cream emulsion, the other (one or more) being emulsions comprising any desired fat other than plain milk fat in the form of a natural cream emulsion, e.g. vegetable fat or specific milk fat fractions. The other fats can be chosen so as to have a higher content of unsaturated fatty acids than milk, and can comprise mono-unsaturated and/or polyunsaturated fatty acids. In one embodiment, fats comprising polyunsaturated fatty acids are preferred in view of the health benefits generally attributed to these fats. If fats comprising polyunsaturated fatty acids are used, it is preferred to take process measures, and/or add adjuvants, so as to prevent oxidation.

In the embodiments where a non-milk fat (vegetable fat or milk fat fractions) is present, said non-milk fat will generally make up 10 wt.% to 80 wt.% of the total fat composition. Preferably, the non-milk fat is present in 20 wt.% to 70 wt.% and more preferably it is within the range of 30 wt.% to 60 wt.%. In view of the desired optimum between replacement of saturated fat, and the retaining of the quality characteristics of the cheese, it is most preferred to retain at least 50% milk fat, i.e. by providing an at least 50/50 mixture of the first and second emulsions. Most preferably, the non-milk fat makes up 30%-50% by weight of the total fat composition, so as to have an optimal contribution of milk fat to the quality of the cheese, and yet have a significant reduction of the content of unsaturated fat. The fat content in the second emulsion itself not particularly critical, and preferably ranges from 10-40 wt.%, more preferably 20-30 wt.%, and most typically 25 wt.%. A preferred way in practice to combine the emulsions so as to provide the desired fat percentages and the desired ratio of milk-fat to non-milk fat, is to mix cream (typically 35 wt.% fat) with the second emulsion (typically 25 wt.% fat), and skimmed milk.

In addition to the embodiments in which two emulsions are combined, the invention, in another embodiment, is also applicable to cheese made from anhydrous milk fat (AMF). In that the first milk fat emulsion may or may not be present, as long as (skimmed) milk is present so as to have a source of casein.

The invention, by stabilizing the AMF with the above-identified denatured, non-coagulated whey protein, essentially allows this AMF to be used in a regular cheese making process, so as to obtain cheese having an acceptable texture. It is also conceivable to use modified AMF, e.g. the more unsaturated fraction thereof or transesterification products thereof, or the soft fraction of milk fat that can be obtained as by-product of bakery milk fat.

The first, milk fat-based emulsion will generally be regular cheese milk. This milk can originate from e.g. cow, buffalo, goat, sheep, or camel. To the extent that milk is turned into cheese milk, this generally means that the fat content is standardized to ensure the desired fat content of the cheese to be produced. Preferably the cheese milk undergoes an only mild heat treatment, in order not to affect the curding (coagulation) process.

As to the second emulsion, the invention is widely applicable to any oil-in-water emulsion. In essence, the oil comprises triglycerides of one or more unsaturated fatty acids, and does so in a higher content than milk fat. The fatty acids can be mono-unsaturated, poly-unsaturated, or they may comprise a mixture of one or more mono-unsaturated fatty acids and one or more poly-unsaturated fatty acids.

It will be understood that, from a technical point of view, the oil in the second emulsion can also, wholly or partially, be one or more saturated fats. Whilst it is thus not intended to exclude the presence thereof, the full benefits of the invention will be enjoyed to a greater extent, with an increasing content of unsaturated fat in the second emulsion. As one such benefit, this serves to provide a cheese product providing, to a greater extent than traditional fully milk-based cheese, the generally recognized health benefits of unsaturated fats. As another benefit, from a technical point of view, the problem of providing cheese having an acceptable texture and/or other organoleptic characteristics is the more prominent with an increasing content of unsaturated fat in the second emulsion, i.e. in that case a more urgent need exists for the invention to solve this problem.

Thus, in a preferred embodiment the oil comprised in the second emulsion in majority (by weight) consists of fat having more than 50 wt.% of unsaturated fatty acids, and preferably more than 60 wt.% of unsaturated fatty acids. Most preferably 75%-100% by weight of the fatty acids in the oil in the second emulsion are unsaturated fatty acids. For completeness' sake it is mentioned that, from a practical point of view, if "all" of the fatty acids are unsaturated, this will not preclude the presence, as an impurity, of unsubstantial amounts of saturated fatty acids (up to 1% by weight, more typically up to 5‰ by weight).

In one embodiment, the oil in the second emulsion is obtainable by fractionating milk fat so as to retain the more unsaturated fat fraction thereof. In a preference of this embodiment, all of the oil in the second emulsion is made up of the unsaturated fat fraction. An advantage of this embodiment is that a cheese is provided that is fully milk-based, and yet serves to provide health benefits as associated with an increased content of unsaturated fat.

In another embodiment, the oil in the second emulsion comprises one or more edible vegetable fats. Suitable vegetable oils include, but are not limited to palm oil, soybean oil, rapeseed oil, sunflower seed oil, peanut oil, hazelnut oil, and other nut oils, cottonseed oil, palm kernel oil, coconut oil, corn oil, grape seed oil, linseed oil, ricer bran oil, safflower oil, sesame oil, and olive oil. A general advantage of using vegetable oils is that, at least perceptively, health benefits are associated herewith. Moreover, by providing the tool to make an organoleptically acceptable cheese despite the use of vegetable fats, the present invention also enables the replacement of milk fat if desired for other reasons than health benefits, e.g. in areas where there is shortage of milk, or where additional use of vegetable fats provides economical benefits.

As mentioned above, the unsaturated fatty acids in the vegetable fat can be mono-unsaturated, poly-unsaturated, or a combination thereof. In a preferred embodiment in case of including poly-unsaturated fatty acids, measures are taken to prevent oxidation (to which poly-unsaturated fatty acids are prone). Such measures can be of a practical nature during processing, i.e. shielding of the cheese making process from oxygen, e.g., by carrying out the process in an inert atmosphere, e.g. under nitrogen. Or one or more nutritionally acceptable anti-oxidants can be added before or during cheese making, preferably as an additive to the second emulsion. Nutritionally acceptable anti-oxidants are known to the skilled person. Typical examples include natural antioxidants such as ascorbic acid (AA, E300) and tocopherols (E306), as well as synthetic antioxidants such as propyl gallate (PG, E310), tertiary butylhydroquinone (TBHQ), butylated hydroxyanisole (BHA, E320) and butylated hydroxytoluene (BHT, E321).

A preferred embodiment is to use fat rich in mono-unsaturated fatty acids. By some authors, mono-unsaturated fat is considered to be probably the healthiest type of general fat. The high consumption of olive oil in Mediterranean countries is considered to be one of the reasons why these countries have lower levels of heart disease. Mono-unsaturated fat is believed to lower cholesterol and may assist in reducing heart disease. Like polyunsaturated fat it provides essential fatty acids for healthy skin and the development of body cells. Mono-unsaturated fat is also believed to offer protection against certain cancers, like breast cancer and colon cancer. Mono-unsaturated fats are typically high in Vitamin E, the anti-oxidant vitamin which is usually in short supply in many Western diets.

Sources of monounsaturated vegetable fat (with weight percentages of mono-unsaturated fat indicated) include, but are not limited to, olive oil (73%) rapeseed oil (60%) hazelnuts (50%) almonds (35%) Brazil nuts (26%) cashews (28%) avocado (12%) sesame seeds (20%) pumpkin seeds (16%).

A preferred source of mono-unsaturated fat according to the invention is sunflower oil, and more preferably the so-called "high oleic sunflower oil"(also known by the abbreviation HOSO), which generally has at least 82% oleic acid.

The invention also provides a cheese or cheese product obtainable by a method as described hereinbefore. In particular, the resulting cheese is a hard or semi-hard cheese comprising unsaturated fat associated with denatured whey protein.

The invention also provides the use of a denatured, non-coagulated whey protein in making a cheese product, particularly a cheese product having an increased content in unsaturated fatty acids, by coagulating a liquid that comprises milk protein and fat, said liquid comprising at least one oil-in-water emulsion, wherein said whey protein is used for the purpose of stabilizing said oil-in-water emulsion, particularly the interface thereof. The emulsions to be stabilized by the whey protein are as described hereinbefore, as is the denatured, non-coagulated whey protein to be used herein.

The invention will hereinafter be further illustrated with reference to the following, non-limiting examples.

### Example 1:

A: Hiprotal® 535 (a WPC - whey protein concentrate - ex Domo) was dissolved to a protein concentration of 5% (w/w). The pH was set to 6.8. The solution was heated for 4 seconds at 120°C, using a small pipe heat exchanger, followed by cooling to room temperature.

B: Using a Dispax system (10,000 rpm), high oleic sunflower oil (HOSO) was injected into a water phase (mixture of water and solution A, see above) until a final oil concentration of 25% (w/w). The final whey protein concentration in the emulsion was 1.75% (w/w). During the preparation of the pre-emulsion, the temperature of the oil and water phases was set to 50°C. Subsequently, the pre-emulsion was homogenized using a two-stage homogenizer at operating pressures of 20 and 10 bar, respectively. The temperature during homogenization was set to 75°C. The obtained oil-in-water emulsion was characterized by an average particle size of 2-2.5 micrometer (D50).

C: Cheeses were prepared as follows. Cheese milk (420 litres) was prepared by mixing emulsion B, skimmed milk and cream to a final fat concentration of 3.5% in which the ratio of milk fat/HOSO was 50/50. After pasteurization of the cheese milk (15 seconds at 74°C), and subsequent cooling to 30°C, cheese was prepared according to a traditional process. This process involves addition of calcium chloride, rennet, lysozyme and a starter culture. After coagulation of the milk, the curd is cut and whey is drained off. After washing of the curd, the curd is pressed and subsequently brined for 24 hours. After ripening for 2, 4, 8, 12 or 16 weeks the cheeses were sampled. Taste and texture of the cheese is very similar to the taste and texture of a reference Gouda cheese.

### Example 2

A recombined emulsion (25% fat) was prepared from anhydrous milk fat (AMF) and water, using denatured, non-coagulated whey protein as emulsifier (see Example 1, A and B). Cheese milk (420 litres) was prepared by mixing the emulsion and skimmed milk to a final fat concentration of 3.5%. After pasteurization of the cheese milk (15 seconds at 74°C), and subsequent cooling to 30°C, cheese was prepared according a traditional process as described in Example 1. The resulting cheeses had good taste and texture.

### Example 3

According to examples 1 and 2, cheese milk was prepared from cream, skimmed milk and recombined emulsion. The recombined emulsion (25% fat) was prepared from sunflower oil, using denatured, non-coagulated whey protein as emulsifier. The ratio milk fat/sunflower oil was 75/25. As described in examples 1 and 2, cheeses were prepared according to a traditional process. The resulting cheeses had good taste and texture.

### Example 4

Cheese was prepared in which 50% of the fat phase contained peanut oil. The peanut oil emulsion was prepared according to the process as described in Example 1. The cheese was prepared according to the process as described in Example 1.

### Example 5

Cheese was prepared according to Example 1, except for two differences:
1. The denatured, non-coagulated whey protein was prepared by heating Hiprotal® 535 by direct steam injection (Sterilab). This heat treatment involved four steps: a) preheating of the Hiprotal solution to 65°C; b) heating 4 seconds at 120°C; c) flash cooling to 65°C; d) post cooling to 10°C.
2. During the emulsification, a smaller amount of the 5% heated, non-coagulated whey protein was injected, resulting in a final whey protein concentration in the emulsion of 0.75%.

Subsequently, cheeses were prepared as described in Example 1. Taste and texture of the cheeses were very similar to that of a reference Gouda cheese.

### Comparative Example

This example pertains to the measurement of SH-reactivity in various treated and untreated whey proteins, without or with heating of an emulsion. The results are depicted in Table 1 and discussed thereafter.

**Table 1**

| Sample | Protein (%) | Δ A₄₁₂ | Δ A₄₁₂, at 5% whey protein | Free S-H (µmol/l)* |
|---|---|---|---|---|
| 1 WPC 45 (Hiprotal®, not pre-treated) | 1.6 | 0.065 | 0.203 | 86 |
| 2 WPC 45 (Hiprotal®, not pre-treated) after heating | 1.6 | 0.058 | 0.181 | 77 |
| 3 WPC 535 (Hiprotal®, not pre-treated) | 1.75 | 0.097 | 0.277 | 117 |
| 4 WPC 535 (Hiprotal®, not pre-treated), after heating | 1.75 | 0.085 | 0.243 | 100 |
| 5 WPC 535 (Hiprotal®, pre-treated by DSI) | 1.75 | 0.399 | 1.140 | 480 |
| 6 WPC 535, (Hiprotal®, pre-treated by DSI) after heating | 1.75 | 0.480 | 1.371 | 580 |

Sample 1 is a whey protein concentrate in accordance with EP 454 268, not pre-treated. This untreated WPC45 shows a low SH activity (86 µmol/L). Sample 2 is the same whey protein concentrate, subjected to a heat treatment as envisaged in EP 454 268, viz. mild heating (a typical cheese milk pasteurization of 15 seconds at 70°C). The SH activity is at the same level, viz. 77 µmol/L Sample 3 is a different whey protein concentrate WPC535,also not pre-treated, and showing a low SH activity of 117 µmol/L. Sample 4 is the same whey protein concentrate as in Sample 3, subjected to a mild heating similar to that of Sample 2. The SH activity does not increase, in fact is only 100 µmol/L. Sample 5 is WPC535 pre-treated in accordance with the invention (4 seconds at 120°C by Direct Steam Injection). The SH activity has increased considerably, viz. to 480 µmol/L. Finally, sample 6 is the pre-treated whey protein concentrate of Sample 5, subjected to the aforementioned pasteurization heating of an emulsion. The result is an SH activity of 580 µmol/L.

The comparative test shows that a pre heat-treated, denatured and non-coagulated whey protein concentrate of the invention shows a bifold improvement of SH activity, hence a bifold improvement of its capability to ultimately aid in providing the desired structure, in cheese making, to a non milk-fat emulsion. For, it is shown that firstly the pre-treatment results in an effect per se of a manifold increase of SH activity. Secondly, the pasteurization heating of an emulsion comprising the thus pre-treated, SH activated whey protein concentrate yields an even further increased SH activity, not seen with the non-pretreated whey protein.

## Claims

1. A method of making a natural, hard or semi-hard cheese or cheese product by coagulating a liquid that comprises milk protein and fat, said liquid comprising at least one oil-in-water emulsion, wherein said emulsion comprises a denatured, non-coagulated whey protein.

2. A method according to claim 1, wherein the fat comprises non-milk fat, one or more milk fat fractions, or isolated milk fat.

3. A method according to claim 1 or 2, wherein the fat comprises anhydrous milk fat (AMF), preferably as the only fat.

4. A method according to any one of the preceding claims, wherein the liquid comprises a first and a second oil-in-water emulsion, the first being milk or cream, the second being an emulsion of a fat having a content of unsaturated fatty acids higher than that of the milk or cream, and preferably a vegetable fat, wherein the second emulsion comprises the denatured, non-coagulated whey protein.

5. A method according to any one of the preceding claims, wherein the oil-in-water emulsion that comprises the denatured, non-coagulated whey protein, is homogenized in the presence of said whey protein, prior to the cheese making process, and preferably prior to combining the first and second emulsions.

6. A method according to any one of the preceding claims, wherein the denatured, non-coagulated whey protein is obtained by subjecting a whey protein to a denaturing heat treatment at pH 6-8,
wherein the denaturing heat treatment is preferably conducted on an aqueous solution of 1-15% by weight of whey protein.

7. A method according to any one of the preceding claims, wherein the cheese is a medium-fat or a full-fat cheese.

8. A method according to any one of the preceding claims, wherein the concentration of the denatured, non-coagulated whey protein in the second emulsion is 0.2% by weight to 5% by weight, preferably 0.5% by weight to 2%.

9. A method according to any one of the preceding claims, wherein the whey protein is selected from whey protein concentrate (WPC), whey protein isolate (WPI), and mixtures thereof.

10. A method according to any one of the preceding claims wherein non-milk fat makes up 10 wt.% to 80 wt.% of the total fat composition, preferably 20 wt.% to 70 wt.%.

11. A method according to claim 10, wherein non-milk fat makes up 30 wt.% to 60 wt.% of the total fat composition, preferably 30 wt.%-50 wt.%.

12. A method according to any one of the preceding claims wherein the fat in the whey protein-containing emulsion comprises an oil selected from the group consisting of palm oil, soybean oil, rapeseed oil, sunflower seed oil, peanut oil, hazelnut oil, and other nut oils, cottonseed oil, palm kernel oil, coconut oil, corn oil, grape seed oil, linseed oil, ricer bran oil, safflower oil, sesame oil, and olive oil, and is preferably high oleic sunflower oil (HOSO).

13. A cheese product obtainable by any one of the preceding claims, preferably being of a cheese type selected from the group consisting of Gouda, Edam, and Maasdam.

14. The use of a denatured, non-coagulated whey protein in making a cheese product, particularly a cheese product having an increased content in unsaturated fatty acids, by coagulating a liquid that comprises milk protein and fat, said liquid comprising at least one oil-in-water emulsion, wherein said whey protein is used for the purpose of stabilizing said oil-in-water emulsion.

15. A use according to claim 14, in a method of making a natural, hard or semi-hard cheese or cheese product as claimed in any one of the claims 1 to 13.

## Patentansprüche

1. Verfahren zur Herstellung eines natürlichen harten oder halbharten Käses oder Käseproduktes durch Koagulation einer Flüssigkeit, die Milchprotein und Fett umfasst, wobei die Flüssigkeit mindestens eine Öl-in-Wasser-Emulsion umfasst, wobei die Emulsion ein denaturiertes, nicht koaguliertes Molkeprotein umfasst.

2. Verfahren nach Anspruch 1, wobei das Fett Nicht-Milchfett, ein oder mehrere Milchfettfraktionen oder isoliertes Milchfett umfasst.

3. Verfahren nach Anspruch 1 oder 2, wobei das Fett wasserfreies Milchfett (AMF) umfasst, bevorzugt als einziges Fett.

4. Verfahren nach einem der vorhergehenden Ansprüche, wobei die Flüssigkeit eine erste und eine zweite Öl-in-Wasser-Emulsion umfasst, wovon die Erste Milch oder Sahne ist, die Zweite eine Emulsion eines Fetts mit einem Gehalt an ungesättigten Fettsäuren ist, der höher als der von der Milch oder Sahne ist, und bevorzugt ein Pflanzenfetts, wobei die zweite Emulsion das denaturierte, nicht koagulierte Molkeprotein umfasst.

5. Verfahren nach einem der vorhergehenden Ansprüche, wobei die Öl-in-Wasser-Emulsion, die das denaturierte, nicht koagulierte Molkeprotein umfasst, in Anwesenheit des Molkeproteins vor dem Käseherstellungsverfahren und bevorzugt vor dem Kombinieren der ersten und zweiten Emulsionen homogenisiert wird.

6. Verfahren nach einem der vorhergehenden Ansprüche, wobei das denaturierte, nicht koagulierte Molkeprotein erhalten wird, indem man ein Molkeprotein einer denaturierenden Wärmebehandlung bei pH 6-8 unterzieht, wobei die denaturierende Wärmebehandlung bevorzugt an einer wässrigen Lösung von 1-15 Gew.-% des Molkeproteins durchgeführt wird.

7. Verfahren nach einem der vorhergehenden Ansprüche, wobei der Käse ein mittelfetter oder ein vollfetter Käse ist.

8. Verfahren nach einem der vorhergehenden Ansprüche, wobei die Konzentration des denaturierten, nicht koagulierten Molkeproteins in der zweiten Emulsion 0,2 Gew.-% bis 5 Gew.-%, bevorzugt 0,5 Gew.-% bis 2 Gew.-% ist.

9. Verfahren nach einem der vorhergehenden Ansprüche, wobei das Molkeprotein aus Molkeproteinkonzentrat (MPK), Molkeproteinisolat (MPI) und Gemischen von diesen ausgewählt ist.

10. Verfahren nach einem der vorhergehenden Ansprüche, wobei Nicht-Milchfett 10 Gew.-% bis 80 Gew.-%, bevorzugt 20 Gew.-% bis 70 Gew.-%, der Gesamtfettzusammensetzung ausmacht.

11. Verfahren nach Anspruch 10, wobei Nicht-Milchfett 30 Gew.-% bis 60 Gew.-%, bevorzugt 30 Gew.-% bis 50 Gew.-%, der Gesamtfettzusammensetzung ausmacht.

12. Verfahren nach einem der vorhergehenden Ansprüche, wobei das Fett in der Milchprotein enthaltenden Emulsion ein Öl umfasst, ausgewählt aus der Gruppe bestehend aus Palmöl, Sojabohnenöl, Rapsöl, Sonnenblumenöl, Erdnussöl, Haselnussöl und anderen Nussölen, Baumwollsamenöl, Palmkernöl, Kokosnussöl, Maisöl, Traubenkernöl, Leinsamenöl, Reiskleieöl, Distelöl, Sesamöl und Olivenöl, und bevorzugt ein high oleic Sonnenblumenöl (HOSO) ist.

13. Käseprodukt, erhältlich nach einem der vorhergehenden Ansprüche, bevorzugt von einer Käsesorte, ausgewählt aus der Gruppe bestehend aus Gouda, Edamer und Maasdamer.

14. Verwendung eines denaturierten, nicht koagulierten Molkeproteins bei der Herstellung eines Käseproduktes, insbesondere eines Käseproduktes mit einem erhöhten Gehalt an ungesättigten Fettsäuren, durch Koagulieren einer Flüssigkeit, die Milchprotein und Fett umfasst, wobei die Flüssigkeit mindestens eine Öl-in-Wasser-Emulsion umfasst, wobei das Molkeprotein zum Zweck des Stabilisierens der Öl-in-Wasser-Emulsion verwendet wird.

15. Verwendung nach Anspruch 14 in einem Verfahren zur Herstellung eines natürlichen harten oder halbharten Käses oder Käseproduktes, wie in einem der Ansprüche 1 bis 13 beansprucht.

## Revendications

1. Procédé destiné à fabriquer un fromage naturel à pâte dure ou mi-dure ou un produit fromager en coagulant un liquide qui comprend une protéine et une matière grasse laitière, ledit liquide comprenant au moins une émulsion huile dans l'eau, ladite émulsion comprenant une protéine lactosérique non coagulée dénaturée.

2. Procédé selon la revendication 1, dans lequel la matière grasse comprend une matière grasse non laitière, une ou plusieurs fractions de matière grasse laitière ou une matière grasse laitière isolée.

3. Procédé selon la revendication 1 ou la revendication 2, dans lequel la matière grasse comprend une matière grasse laitière anhydre (MGLA), de préférence en tant que seule matière grasse.

4. Procédé selon l'une quelconque des revendications précédentes, dans lequel le liquide comprend des première et seconde émulsions huile dans l'eau, la première étant laitière ou de la crème, la seconde étant une émulsion d'une matière grasse qui présente une teneur en acides gras insaturés supérieure à celle laitière ou de la crème, et de préférence une matière grasse végétale, la seconde émulsion comprenant une protéine lactosérique non coagulée dénaturée.

5. Procédé selon l'une quelconque des revendications précédentes, dans lequel l'émulsion huile dans l'eau qui comprend la protéine lactosérique non coagulée dénaturée, est homogénéisée en présence de ladite protéine lactosérique, avant le processus de fabrication du fromage, et de préférence avant l'association des première et seconde émulsions.

6. Procédé selon l'une quelconque des revendications précédentes, dans lequel la protéine lactosérique non coagulée dénaturée est obtenue en soumettant une protéine lactosérique à un traitement thermique de dénaturation à un pH compris entre 6 et 8, dans lequel le traitement thermique de dénaturation est exécuté de préférence sur une solution aqueuse de 1 % en poids à 15 % en poids de la protéine lactosérique.

7. Procédé selon l'une quelconque des revendications précédentes, dans lequel le fromage est un fromage mi-gras ou un fromage gras.

8. Procédé selon l'une quelconque des revendications précédentes, dans lequel la concentration de la protéine lactosérique non coagulée dénaturée dans la seconde émulsion est comprise entre 0,2 % en poids et 5 % en poids, de préférence entre 0,5 % en poids et 2 % en poids.

9. Procédé selon l'une quelconque des revendications précédentes, dans lequel la protéine lactosérique est sélectionnée parmi un concentré de protéine lactosérique (WPC), un isolat de protéine lactosérique (WPI) et des mélanges de ceux-ci.

10. Procédé selon l'une quelconque des revendications précédentes, dans lequel la matière grasse non laitière représente entre 10 et 80 % en poids de la composition de matière grasse totale, de préférence entre 20 et 70 % en poids.

11. Procédé selon la revendication 10, dans lequel la matière grasse non laitière représente entre 30 et 60 % en poids de la composition de matière grasse totale, de préférence entre 30 et 50 % en poids.

12. Procédé selon l'une quelconque des revendications précédentes, dans lequel la matière grasse dans l'émulsion qui contient une protéine lactosérique comprend une huile sélectionnée dans le groupe constitué par une huile de palmier, une huile de soja, une huile de colza, une huile de tournesol, une huile d'arachide, une huile de noisette et toutes autres huiles de noix, une huile de coton, une huile de palmiste, une huile de noix de coco, une huile de maïs, une huile de pépins de raisin, une huile de lin, une huile de riz, une huile de carthame, une huile de sésame et une huile d'olive, et est de préférence une huile de tournesol fortement oléique (HOSO).

13. Produit fromager qu'il est possible d'obtenir selon l'une quelconque des revendications précédentes, étant de préférence d'un type de fromage sélectionné dans le groupe constitué par le gouda, l'édam et le maasdam.

14. Utilisation d'une protéine lactosérique non coagulée dénaturée dans la fabrication d'un produit fromager, en particulier d'un produit fromager qui présente une teneur accrue en acides gras insaturés, en coagulant un liquide qui comprend une protéine et une matière grasse laitière, ledit liquide comprenant au moins une émulsion huile dans l'eau, dans lequel ladite protéine lactosérique est utilisée de façon à stabiliser ladite émulsion huile dans l'eau.

15. Utilisation selon la revendication 14, dans un procédé de fabrication d'un fromage à pâte mi-dure ou dure ou d'un produit fromager selon l'une quelconque des revendications 1 à 13.
